# EUROPÄISCHE PATENTANMELDUNG

(11) **EP 0 916 248 A1**
(43) Veröffentlichungstag der Anmeldung: **19.05.1999**
(21) Anmeldenummer: 98120540.4
(22) Anmeldetag: 30.10.1998
(51) Int. Cl.: A01D 43/10

(54) **Antrieb Kreiselmäher mit Aufbereiter**

(30) Priorität: 06.11.1997 DE 19749097; 05.06.1998 DE 19825143
(71) Anmelder: NIEMEYER Landmaschinen GmbH, D-48477 Hörstel-Riesenbeck (DE)
(72) Erfinder: Ungruh, Josef, 48429 Rheine (DE)

(57) **Zusammenfassung**

Antrieb für Kreiselmähwerke mit Aufbereiter zur Ankopplung an Heck- oder Front-Krafthebern von Traktoren (23), in angebauter oder gezogener Ausführung, wobei Kreiselmäher (1) und Aufbereiter (2) eine Einheit bilden, die gemeinsam von der Zapfwelle (24) eines Traktors (23) mit einer Gelenkwelle (25) angetrieben werden, wobei der Hauptantriebsstrang mit seinem Hauptantriebsdrehmoment (M_{H}) an die Antriebswelle (20) des Aufbereiters (2) herangeführt und mit dieser antreibbar gekoppelt ist, und daß durch eine Drehmomentenverzweigung ausgehend von der Antriebswelle (20) des Aufbereiters (2) diese über einen weiteren Antriebsstrang die Antriebswelle (18) des Kreiselmähers (1) antreibt.

## Beschreibung

Die Erfindung betrifft einen Kreiselmäher mit Aufbereiter, als Einheit zu einem Gerät zusammengefügt, zum Mähen von Grünfutter und Halmgut nach dem Oberbegriff des Anspruchs 1.

Aus der DE 296 07 248 U1 ist beispielsweise ein Aufbereiter zum Anbau an einen Kreiselmäher nach dem Oberbegriff des Anspruch 1 bekannt. Aufbereiter nehmen gemähtes Grünfutter in einem Arbeitsgang mit dem Mähvorgang auf und bearbeiten es mit rotierenden Werkzeugen. Dadurch wird das Grünfutter angeknickt und angequetscht, wodurch der Anwelkprozeß beschleunigt wird.

Kreiselmäher mit Aufbereiter werden beispielsweise an das Dreipunktgestänge eines Krafthebers von Traktoren angebaut, sowohl im Heck- als auch im Frontanbaubetrieb. Sie können ebenso als gezogene Geräte von einem Traktor angetrieben werden. Die Arbeitswerkzeuge von Kreiselmäher und Aufbereiter werden von der Zapfwelle eines Traktors angetrieben.

Die Arbeitswerkzeuge eines Aufbereiters, beispielsweise Zinken einer Rotorwelle oder paarweise einander zugeordnete Quetschwalzen, sind teilweise von einem Gehäuse umgeben, welches gleichzeitig als Schutzeinrichtung dient, wobei der von den Werkzeugen bearbeitete Grünfutterfluß den Gehäuseinnenraum durchquert.

Die Antriebsdrehmomente beider Antriebe, der des Kreiselmähers und des Aufbereiters, werden mittels einer Gelenkwelle von der Zapfwelle eines Traktors abgegriffen und über weitere Antriebsstränge dem Kreiselmäher und dem Aufbereiter zugeführt.

In der Praxis sind verschiedene Ausführungsformen von Antriebssträngen für Kreiselmäher und Aufbereiter bekannt, die aus zusammenwirkenden Transmissionsteilen bestehen. Diese können beispielsweise bestehen aus Gelenkwellen, Kegelrad-, Stirnradgetriebe, Keilriemen-, Zahnriementriebe, die je nach Art des Zusammenwirkens die Antriebswellen von Kreiselmäher und Aufbereiter antreiben.

In der Praxis sind zwei grundsätzliche Ausführungsformen von Antriebssträngen zum Antrieb von Kreiselmähern mit Aufbereitern bekannt.

Die erste grundsätzliche Ausführungsform verzweigt den Hauptantriebsstrang im Bereich der Kopplungsebene zwischen Traktor und Kreiselmäher mit Aufbereiter in zwei Antriebsstränge. Dadurch werden Kreiselmäher und Aufbereiter mit separaten Antriebssträngen angetrieben. Diese Verzweigung der Antriebsdrehmomente kann beispielsweise durch ein Kegelradgetriebe erfolgen, wobei die Antriebswelle des Kegelradgetriebes mit der Gelenkwelle des Traktors verbunden ist und zwei Abtriebswellen des Kegelradgetriebes die Antriebsstränge für Kreiselmäher und Aufbereiter antreiben.

Die zweite grundsätzliche Ausführungsform besitzt einen Hauptantriebsstrang, der zunächst direkt mit der Antriebswelle des Kreiselmähers gekoppelt ist. Dabei wird die Antriebswelle des Kreiselmähers als vorgelagerte Antriebswelle genutzt, so daß das Antriebsdrehmoment des Aufbereiters von der Antriebswelle des Kreiselmähers abgegriffen, d. h. als zweiter Antriebsstrang verzweigt wird. Der zweite Antriebsstrang kann beispielsweise ein Treibmittelantrieb ausgeführt als Keilriementrieb sein.

Unter Betriebsbedingungen im praktischen Einsatz von Kreiselmähern mit Aufbereitern können die Grünfuttereigenschaften sehr verschieden sein.

In der Praxis existiert eine große Bandbreite unterschiedlichster Beschaffenheit von Grünfuttereigenschaften und -beständen, deren Ursache beispielsweise boden-, sorten-, jahreszeitlich-, witterungs-, oder auch von der Länge der Wachstumsperiode abhängig ist.

Unter Betriebsbedingungen im praktischen Einsatz von Kreiselmähern mit Aufbereitern können zusätzlich zur vorgenannten unterschiedlichen Beschaffenheit von Grünfutter innerhalb einer Grünlandfläche unterschiedlich dichte Grünfutterbestände existieren, so daß dieses den momentanen Grünfutterdurchfluß für Kreiselmäher mit Aufbereiter verändern kann. Dadurch muß möglicherweise die Fahrgeschwindigkeit des Traktors dem Arbeitsprozess neu angepaßt werden.

Die vorgenannte Beschaffenheit des Grünfutters und die jeweiligen Einsatz- und Betriebsbedingungen für Kreiselmäher und Aufbereiter können eine erhebliche Veränderung der Leistungsaufnahme an der Antriebswelle eines Aufbereiters zur Folge haben. Dabei ist es durchaus möglich, daß die Leistungsaufnahme von Kreiselmäher und Aufbereiter während des Arbeitsprozesses momentan beschleunigt zunimmt.

Ursache für eine beschleunigte Zunahme dieser Antriebsleistung können beispielsweise Behinderungen des Grünfutterdurchfluß während der Einwirkdauer der Bearbeitungswerkzeuge auf das Grünfutter beim Durchqueren des Bearbeitungsraums des Aufbereiters sein, so daß dieses zu gehäufter Ansammlung von Grünfutter innerhalb des Aufbereiters führen kann.

Dieses kann zum Umwickeln der Arbeitswerkzeuge mit Grünfutter führen, welches zu erheblichen Zeitunterbrechungen im Arbeitsablauf durch Beseitigung dieses Störzustandes führen kann.

Störvorgänge dieser Art, die zu Unterbrechungen des Arbeitsablaufs führen können, sind nachfolgend als betriebsbedingtes Störverhalten definiert.

Durch Störverhalten dieser Art variieren die Antriebsdrehmomente an den Antriebswellen von Kreiselmäher und Aufbereiters, die zu hohen Belastungsspitzen führen können. Insbesondere in Verbindung mit Keilriementrieben kann dieses Schlupf zwischen Keilriemen und Keilriemenscheibe herbeiführen, welches ein Absinken der Arbeitsdrehzahl der rotierenden Werkzeuge des Aufbereiters zur Folge haben kann. Dieses kann der Beginn einer Überlastsituation sein, deren Folge die Verstopfung des Aufbereiters sein kann.

Das zuvor dargelegte, von schwierigen Einsatzbedingungen geprägte Störverhalten verursacht insbesondere dann eine hohe Belastung der Transmissionselemente der Antriebsstränge, wenn sich das Grünfutter im Gehäuse des Aufbereiters zu stauen beginnt, welches eine schnelle Zunahme des Lastdrehmomentes an der Antriebswelle der rotierenden Werkzeugen des Aufbereiters bewirkt. Zur Aufrechterhaltung der Betriebsdrehzahl des Aufbereiters, und damit zur Überwindung des sich anbahnenden Störverhaltens, ist eine momentan erhebliche Steigerung des dazu erforderlichen Antriebsdrehmomentes, insbesondere an der Antriebswelle des Aufbereiters, erforderlich.

Führt das dargelegte Störverhalten zur Abnahme von Motor- und Zapfwellendrehzahl, wirkt die in den Mähkreiseln gespeicherte Rotationsenergie energetisch rückkoppelnd und antreibend auf die Antriebsstränge ein. Dieses unterstützt prinzipiell die Überwindung des dargelegten Störverhaltens, wirkt sich im Ergebnis aber eher ungünstig aus, wenn dessen Überwindung nicht eintritt.

Muß der Arbeitsprozeß unterbrochen werden, weil die rotierenden Werkzeuge des Aufbereiters sich mit Grünfutter umwickeln, welches die Antriebswelle des Aufbereiters blockieren kann, kann diese energetische Rückkopplung auch ungünstig auf diesen Betriebszustand einwirken, indem die rotierenden Werkzeuge des Aufbereiters numehr in den Blockadezustand im Sinne eines sich Verkeilens festlaufen können.

In Verbindung mit Traktoren hoher Antriebsleistung werden häufig Gelenkwellen mit einer Überlastsicherung als Rutschkupplung eingesetzt. Diese schützt insbesondere in der Hochlaufphase der Mähkreisel die Transmissionselemente der Anriebsstränge vor zu hoher Belastung durch Beschleunigungskräfte.

Rutschkupplungen sprechen aber auch dann an, wenn diese im Betriebszustand ihr eingestelltes maximales Drehmoment überschreiten, wodurch die Antriebsstränge ebenfalls vor länger anhaltenden Überlastungen geschützt werden.

Die vorgenannte rotationsenergetische Rückkopplung kann zeitlich verzögernd auf das Ansprechen einer Rutschkupplung einwirken, wodurch insbesondere beim Einsatz von Keilriementrieben der Schlupfzustand zwischen Keilriemen und Keilriemenscheibe zeitlich verlängert werden kann. Dieses kann dazu beitragen, Beschädigungen der Keilriemen durch Überhitzung herbeizuführen.

**Aufgabe der Erfindung** ist es, mit einfachen Mitteln ein verbessertes Antriebssystem für Kreiselmäher mit Aufbereiter zu schaffen, um damit gegenüber betriebsbedingten Störeinflüssen das dynamische Betriebsverhalten zu stabilisieren und zu verbessern. Gelöst wird die Aufgabe mit den im kennzeichnenden Teil des Anspruchs 1 genannten Merkmalen. Hinsichtlich weiterer wesentlicher Ausgestaltungen der Erfindung wird auf die Ansprüche 2 bis 8 verwiesen.

Die erfinderische Aufgabe wird gelöst durch die Art der Ausgestaltung der Antriebsstränge. Durch diese Ausgestaltung werden die oben aufgeführten Nachteile des Rückkopplungseffektes durch Rückführung der Rotationsenergie in den Antriebsstrang minimiert.

Dieses wird dadurch erreicht, daß der Antrieb des Kreiselmähers als Schleppantrieb des Aufbereiters ausgebildet ist, bei dem zum einen die Antriebssteife der Antriebswelle des Aufbereiters erhöht und stabilisiert wird. Dadurch wird gleichzeitig näherungsweise proportionales Verhalten zwischen dem Anstieg des Lastdrehmomentes an der Antriebswelle des Aufbereiters und dem Anstieg des Antriebdrehmomentes an der Zapfwelle des Traktors erzeugt.

Ausgehend von der Zapfwelle eines Traktors wird der Hauptantriebsstrang direkt zur Antriebswelle des Aufbereiters geführt und mit dieser gekoppelt. Die Antriebswelle des Aufbereiters ist mit der Antriebswelle des Kreiselmähers über einen zweiten Antriebsstrang als Nebenantriebsstrang gekoppelt, beispielsweise durch einen Treibmittelantrieb, ausgeführt als Keilriementrieb. Dadurch wird die Antriebswelle des Aufbereiters zur vorgelagerten Antriebswelle des Kreiselmähers.

Der Nebenantriebsstrang für den Kreiselmäher ist beispielsweise in besonders vorteihafter Weise als Keilriementrieb ausgeführt, welcher fluchtungsunempfindlich, wartungsarm, geräuscharm, amplitudenbedämpfend auf Drehkräfte einwirkend, zur Verbesserung der wirtschaftlichen Nutzung eines Kreiselmähers mit Aufbereiter beiträgt.

Grundsätzlich kann die Übertragung der Drehkräfte auch anderweitig erfolgen, beispielsweise durch Zahnriemen oder Rollenketten oder auch durch Winkelgetriebe, die durch einen Antriebsstrang miteinander verbunden sind.

Dieser zweite Antriebsstrang als Nebenantriebsstrang kann auch aus einer Kombination von Winkelgetrieben und einer Gelenkwelle bestehen, wobei das antreibende Winkelgetriebe mit der Antriebswelle des Aufbereiters und das angetriebene Winkelgetriebe mit der Antriebswelle des Kreiselmähers gekoppelt ist und beide Winkelgetriebe mittels einer Gelenkwelle in Wirkbeziehung miteinander gebracht sind.

Diese Gelenkwelle kann auch mit einer Freilaufkupplung ausgestattet sein, so daß dadurch die energetische Rückkopplung ausgehend von den Mähkreiseln begrenzt wird. Dieses verhindert Belastungsspitzen in den Antriebssträngen und damit in den Transmissionselementen zwischen Zapfwelle, Aufbereiter und Kreiselmäher im Fall des dargestellten Störverhaltens.

Dieses Antriebskonzept nach der Erfindung erhöht die Antriebssteife der Antriebswelle des Aufbereiters und verursacht näherungsweise proportionales Verhalten zwischen Lastdrehmoment an der Antriebswelle des Aufbereiters und dem Antriebsmoment an der Zapfwelle des Traktors.

Momentan wechselnde und hohe Lastspitzen an der Antriebswelle eines Aufbereiters können in der Prazis häufig vorkommen, wobei nach dem Antriebskonzept der Erfindung diese antriebsseitig durch Erhöhung der Antriebssteife der Antriebswelle des Aufbereiters durch proportionales Verhalten des Anstiegs des Antriebsdrehmomentes schneller abgedeckt werden können.

Die gespeicherte Rotationsenergie der Mähkreisel zur Abdeckung momentan sprunghaft ansteigender Lastspitzen kann dennoch in begrenztem Umfang auf die Antriebswelle des Aufbereiters antreibend einwirken.

Reicht auch diese Energie zur Überwindung des Störverhaltens nicht aus, sinkt die Drehzahl der Mähkreisel näherungsweise proportional mit der Drehzahl der Antriebswelle des Aufbereiters und damit näherungsweise proportional zur Drehzahl der Zapfwelle des Traktors.

Ist eine Gelenkwelle mit einer Überlastkupplung ausgestattet, wirkt sich das dynamische Betriebsverhalten eines Antriebs nach der Erfindung ebenfalls günstig auf deren Ansprechverhalten aus. Bei steilem Anstieg des Lastdrehmomentes an der Antriebswelle des Aufbereiters wird dieses näherungsweise proportional und ohne wesentliche zeitliche Verzögerung auf die Zapfwelle des Traktors und damit gleichzeitig auf die Überlastkupplung übertragen.

Dadurch bedingt kann die Überlastkupplung im Falle des Überschreitens des voreingestellten Drehmomentes schneller ansprechen, wodurch die zeitliche Verzögerung als Ansprechzeit minimal ist. Dieses schützt die Transmissionselemente der Antriebsstränge vor unnötiger Überlastungsdauer.

Dieses Antriebskonzept schafft somit die Voraussetzungen, auf Änderungen des Lastdrehmomentes an der Antriebswelle des Aufbereiters näherungsweise proportional und ohne wesentliche Phasenverschiebung reagieren zu können.

Dieses wirkt sich günstig aus auf die Eingrenzung der Auswirkungen betriebsbedingten Störverhaltens unter Einsatzbedingungen mit erhöhten Anforderungen.

Zusätzlich wirkt dieses Antriebskonzept bedämpfend auf die Unterdrückung von Belastungsspitzen in den Antriebssträngen zwischen Traktor, Aufbereiter und Kreiselmäher ein.

Beide Wirkungen stabilisieren das dynamische Betriebsverhalten eines Kreiselmähers mit Aufbereiter und damit den Arbeitsprozess insgesamt.

Unter extremem Einsatzbedingungen kann sich ungeachtet des verbesserten Antriebskonzeptes dennoch ein Störzustand entwickeln, der zur Folge hat, daß die Drehzahl des Aufbereiters abnimmt und damit auch die Drehzahl der Mähkreisel.

Dieses Antriebskonzept fördert dann aber den Prozeß, daß der Mähvorgang schnellstmöglich unterbrochen und der Grünfutterzufluß des Aufbereiter schnellstens gestoppt und mengenmäßig nicht unnötig vergrößert wird. Damit ist eine weiter Voraussetzung geschaffen, die Folgen des Störverhaltens schnellstmöglich zu beseitigen, wobei es häufig ausreichend ist, die Arbeitswerkzeuge zu deren Freiarbeitung im Leerlaufbetrieb mit geminderter Arbeitsdrehzahl drehen zu lassen.

Gelöst wird die der Erfindung zugrunde liegende Aufgabenstellung mit den Merkmalen des Anspruchs 1. Weitere Merkmale und Vorteile der Erfindung ergeben sich aus der nachfolgenden Beschreibung und den Zeichnungen, in denen ein Ausführungsbeispiel eines Antriebs von Kreiselmähern mit Aufbereiter gemäß der Erfindung schematisch, angenähert maßstäblich dargestellt ist. Weitere Merkmale und Vorteile der Erfindung ergeben sich aus der nachfolgenden Beschreibung und den Zeichnungen. Es zeigen:
- Fig. 1: Einen Kreiselmäher mit Aufbereiter (3) mit einem Antrieb in bekannter Bauweise, gesehen in Draufsicht auf die Arbeitsebene in Fahrtrichtung (F).
- Fig. 2 -: Ein Ausführungsbeispiel für einen Kreiselmäher mit Aufbereiter (3) nach der Erfindung.
- Fig. 3 -: Ein Ausführungsbeispiel für einen Kreiselmäher mit Aufbereiter (3) nach der Erfindung mit einer Freilaufkupplung (22) zwischen Aufbereiter (2) und Kreiselmäher (1)

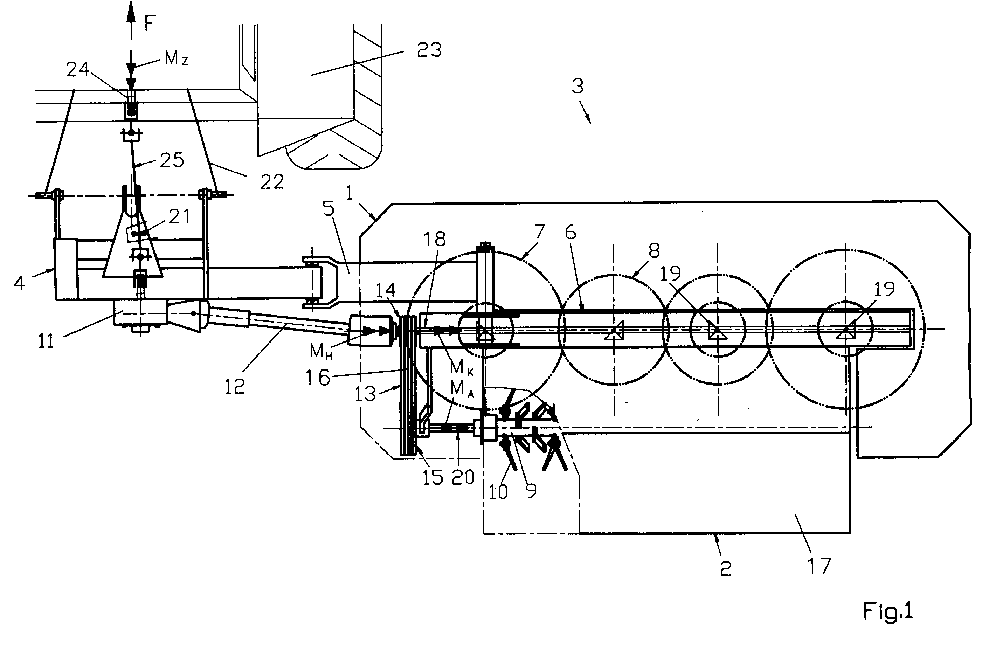

**Fig. 1** zeigt einen Kreiselmäher mit Aufbereiter (3) in Draufsicht in Fahrtrichtung (F), bestehend aus einem Kreiselmäher (1) und einem Aufbereiter (2), beispielsweise ausgeführt als Knickzetter, für den Anbau an das Dreipunktgestänge (22) eines Traktors (23).

Ein Kreiselmäher (1) nach dem Ausführungsbeispiel besteht im wesentlichen aus Tragbock (4), Ausleger (5), Getriebekasten (6), Mähkreiseln (7,8), Winkelgetriebe (11) mit Vielkeilwelle zum Aufstecken einer vereinfacht dargestellten Gelenkwelle (25) mit Überlastkupplung (21), Zapfwelle (24) zwischen Traktor (23) und Kreiselmäher mit Aufbereiter (3), Gelenkwelle (12), welche den Antriebsstrang vom Winkelgetriebe (11) zum Getriebekasten (6) darstellt. In dem Getriebekasten (6) befindet sich die Antriebswelle (18) für den Kreiselmäher (1), welche über Kegelradsätze (19), die ein Winkelgetriebe bilden, welches die einzelnen Mähkreisel (7,8) antreibt.

Ein Aufbereiter (2) nach dem Ausführungsbeispiel besteht im wesentlichen aus einem Gehäuse (17), der Rotorwelle (9) mit den Zinken (10) als Bearbeitungswerkzeuge zum Anknicken des Halmgutes.

Der Antriebsstrang zwischen Kreiselmäher (1) und Aufbereiter (2) wird gebildet von einem Keilriementrieb (13), bestehend aus den Keilriemenscheiben (14,15) und einem Satz Keilriemen (16).

Das Antriebsdrehmoment (M_{Z}) für Kreiselmäher (1) und Aufbereiter (2) wird von der Zapfwelle (24) eines Traktors (23) über den Hauptantriebsstrang (M_{H}), bestehend aus Gelenkwelle (25), Winkelgetriebe (11), Gelenkwelle (12) auf die Antriebswelle (18) des Kreiselmähers (1) übertragen.

Die antreibende Keilriemenscheibe (14) für den Aufbereiter (2) befindet sich auf der Antriebswelle (18) des Kreiselmähers (1) und überträgt mit dem Treibmittelantrieb, bestehend aus dem Keilriementrieb (13), das Antriebsdrehmoment (M_{A}) auf die Keilriemenscheibe (15) und damit auf die Antriebswelle (20) des Aufbereiters (2).

An der Keilriemenscheibe (14) wird somit das Hauptantriebsdrehmoment (M_{H}) verzweigt derart, daß der eine Teil dieses Hauptantriebsdrehmomentes (M_{H}) als Antriebsdrehmoment (M_{K}) dem Kreiselmäher (1) und der andere Teil des Hauptantriebsdrehmomentes (M_{H}) dem Aufbereiter (2) zugeführt wird.

Die Überlastkupplung (21) der Gelenkwelle (25) begrenzt das Hauptantriebsdrehmoment (M_{H}) zum Antrieb von Kreiselmäher mit Aufbereiter (3).

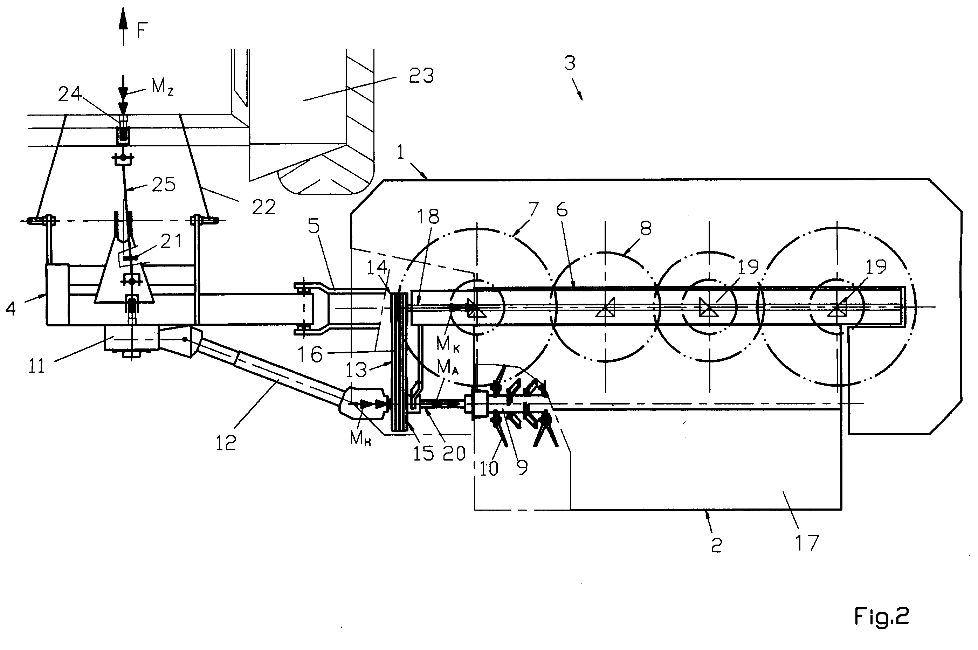

**Fig. 2** zeigt einen Kreiselmäher mit Aufbereiter (3) nach der Erfindung. Die Gelenkwelle (12) ist direkt vom Winkelgetriebe (11) ausgehend mit der Antriebswelle (20) des Aufbereiters (2) verbunden. Die Antriebswelle (18) zum Antrieb der Mähkreisel (7,8) wird von dem Keilriementrieb (13), ausgehend von der Antriebswelle (20) des Aufbereiters (2) angetrieben. Die Keilriemenscheibe (15), welche drehfest mit der Antriebswelle (20) verbunden ist, treibt die Keilriemenscheibe (14) an, welche drehfest mit der Antriebswelle (18) verbunden ist.

Die Gelenkwelle (12) überträgt das Hauptantriebsdrehmoment (M_{H}) auf die Antriebswelle (20) des Aufbereiters (2). Der Keilriementrieb (13) überträgt das Antriebsdrehmoment (M_{K}) auf die Keilriemenscheibe (14) und damit auf die Antriebswelle (18) des Kreiselmähers (1), so daß das Hauptantriebsdrehmoment (M_{H}) durch den Keilriementrieb (13) an der Antriebswelle (20) des Aufbereiters (2) verzweigt wird zum einen in Richtung des Aufbereiters (2) durch das Antriebsdrehmoment (M_{A}) und zum andern in Richtung des Kreiselmähers (1) durch das Antriebsdrehmoment (M_{K}).

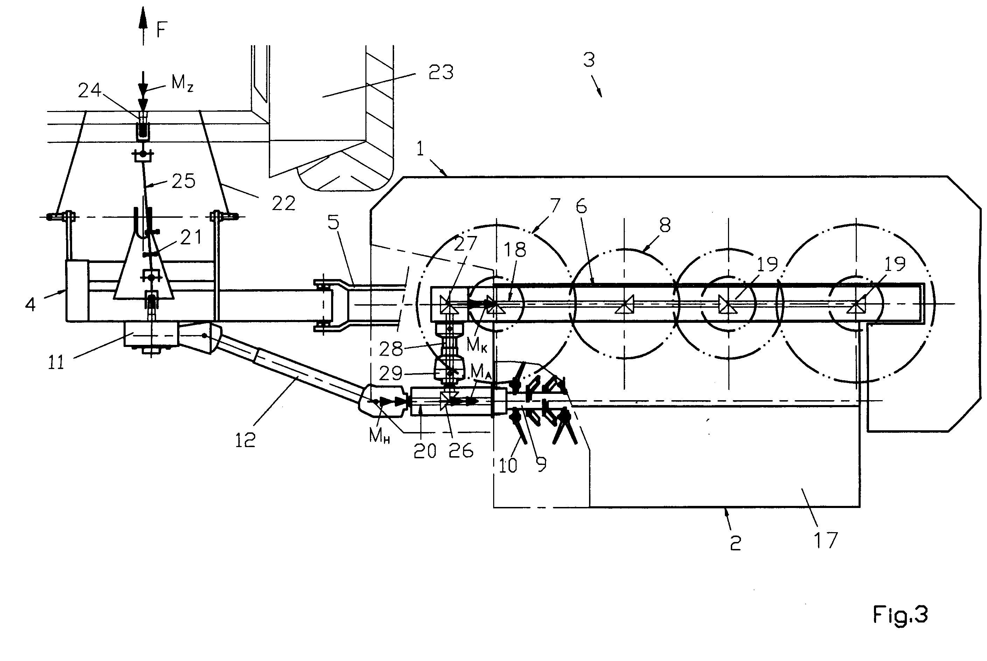

**Fig. 3** zeigt ebenfalls einen Kreiselmäher mit Aufbereiter (3) nach der Erfindung. Die Gelenkwelle (12) überträgt das Hauptantriebsdrehmoment (M_{H}) auf die Antriebswelle (20) des Aufbereiters (2), welche gleichzeitig die Eingangswelle des Winkelgetriebes (26) darstellt. Das Winkelgetriebe (26) verzweigt das Hauptantriebsdrehmoment (M_{H}) zum einen als Antriebsdrehmoment (M_{A}) des Aufbereiters (2) auf seine Rotorwelle (9) und zum anderen über die Gelenkwelle (28) und das Winkelgetriebe (27) als Antriebsdrehmoment (M_{K}) auf die Antriebswelle (18) des Kreiselmähers (1).

Die Gelenkwelle (28) ist mit einer Freilaufkupplung (29) ausgestattet, wobei Kreiselmäher (1) und Aufbereiter (2) über die Gelenkwelle (28) derart in Wirkverbindung stehen, daß die Antriebswelle (20) des Aufbereiters (2) die Antriebswelle (18) des Kreiselmähers (1) antreibt. Die umgekehrte Wirkungsverbindung derart, daß die Rotationsenergie der Mähkreisel (7,8) des Kreiselmähers (1) die Rotorwelle (9) des Aufbereiters (2) antreiben können, ist durch die Freilaufkupplung (29) ausgeschlossen.

Dieses Antriebskonzept nach der Erfindung ist anwendbar auf angebaute Kreiselmäher mit Aufbereiter im Front- oder Heckanbaubetrieb oder auch für angehängte Kreiselmäher mit Aufbereiter, die von einen Traktor angetrieben werden.

### Bezugszeichenliste

- 1 -: Kreiselmäher
- 2 -: Aufbereiter
- 3 -: Kreiselmäher mit Aufbereiter
- 4 -: Tragbock
- 5 -: Ausleger
- 6 -: Getriebekasten
- 7 -: Mähkreisel
- 8 -: Mähkreisel
- 9 -: Rotorwelle
- 10 -: Zinken
- 11 -: Winkelgetriebe
- 12 -: Gelenkwelle
- 13 -: Keilriementrieb
- 14 -: Keilriemenscheibe
- 15 -: Keilriemenscheibe
- 16 -: Keilriemen
- 17 -: Gehäuse
- 18 -: Antriebswelle Kreiselmäher
- 19 -: Kegelradsätze
- 20 -: Antriebswelle Aufbereiter
- 21 -: Überlastkupplung
- 22 -: Dreipunktgestänge
- 23 -: Traktor
- 24 -: Zapfwelle
- 25 -: Gelenkwelle
- 26 -: Winkelgetriebe
- 27 -: Winkelgetriebe
- 28 -: Gelenkwelle
- 29 -: Freilaufkupplung
- F -: Fahrtrichtung
- M_{Z} -: Antriebsdrehmoment Zapfwelle
- M_{K} -: Antriebsdrehmoment Kreiselmäher
- M_{A} -: Antriebsdrehmoment Aufbereiter
- M_{H} -: Hauptantriebsdrehmoment (für Kreiselmäher und Aufbereiter)

## Patentansprüche

1. Antrieb für Kreiselmähwerke mit Aufbereiter zur Ankopplung an Heck- oder Front-Krafthebern von Traktoren (23), in angebauter oder gezogener Ausführung, wobei Kreiselmäher (1) und Aufbereiter (2) eine Einheit bilden, die gemeinsam von der Zapfwelle (24) eines Traktors (23) mit einer Gelenkwelle (25) angetrieben werden, wobei am geräteseitigen Ende der Gelenkwelle (25) der Hauptantriebsstrang mit seinem Hauptantriebsdrehmoment (M_{H}) in zwei Antriebsstränge verzweigt ist, in einen Antriebsstrang für den Kreiselmäher (1) und in einen anderen Antriebsstrang für den Aufbereiter (2), wobei der eine Antriebsstrang den Kreiselmäher (1) und der andere Antriebsstrang den Aufbereiter (2) antreibt, oder der Hauptantriebsstrang bis an die Antriebswelle (18) des Kreiselmähers (1) herangeführt und mit dieser antreibbar gekoppelt ist und die Antriebswelle (18) des Kreiselmähers (1) die Antriebswelle (20) des Aufbereiters (2) antreibt, **dadurch gekennzeichnet,** daß der Hauptantriebsstrang mit seinem Hauptantriebsdrehmoment (M_{H}) an die Antriebswelle (20) des Aufbereiters (2) herangeführt und mit dieser antreibbar gekoppelt ist, und daß durch eine Drehmomentenverzweigung ausgehend von der Antriebswelle (20) des Aufbereiters (2) diese über einen weiteren Antriebsstrang die Antriebswelle (18) des Kreiselmähers (1) antreibt.

2. Antrieb für Kreiselmähwerke mit Aufbereiter nach Anspruch 1, **dadurch gekennzeichnet,** daß der Antriebsstrang zum Antrieb des Kreiselmähers (1) als Treibmittelantrieb ausgebildet ist.

3. Antrieb für Kreiselmähwerke mit Aufbereiter nach Anspruch 1 und 2 **dadurch gekennzeichnet,** daß der Treibmittelantrieb des Kreiselmähers (1) als Keilriementrieb (13) ausgebildet ist.

4. Antrieb für Kreiselmähwerke mit Aufbereiter nach Anspruch 1 und 2, **dadurch gekennzeichnet,** daß der Antrieb des Kreiselmähers als Zahnriementrieb ausgebildet ist.

5. Antrieb für Kreiselmähwerke mit Aufbereiter nach Anspruch 1 und 2, **dadurch gekennzeichnet,** daß der Antrieb des Kreiselmähers als Rollenkettentrieb ausgebildet ist.

6. Antrieb für Kreiselmähwerke mit Aufbereiter nach Anspruch 1, **dadurch gekennzeichnet,** daß der Antriebsstrang zwischen Aufbereiter und Kreiselmäher aus einer Kombination von Winkelgetrieben besteht, wobei das Winkelgetriebe (26) eine Durchtriebswelle als Antriebswelle (20) für den Aufbereiter (2) besitzt, welches über eine Abtriebswelle mit der Antriebswelle des zweiten Winkelgetriebe (27) verbunden ist, wobei die Abtriebswelle des zweiten Winkelgetriebes (27) die Antriebswelle (18) des Kreiselmähers (1) ist.

7. Antrieb für Kreiselmähwerke mit Aufbereiter nach Anspruch 6, **dadurch gekennzeichnet,** daß die Verbindungswelle zwischen den Winkelgetrieben (26,27) aus einer Gelenkwelle (28) besteht.

8. Kreiselmähwerk mit Aufbereiter nach Anspruch 1 bis 7, **dadurch gekennzeichnet,** daß der Antriebsstrang zwischen Aufbereiter (2) und Kreiselmäher (1) eine Freilaufkupplung (29) besitzt.
